**Europäisches Patentamt**

**European Patent Office**

**Office européen des brevets**

(11) Numéro de publication : **0 448 435 B1**

(12) **FASCICULE DE BREVET EUROPEEN**

(45) Date de publication du fascicule du brevet :
06.10.93 Bulletin 93/40

(51) Int. Cl.⁵ : **B01J 37/20, C10G 45/04**

(21) Numéro de dépôt : **91400581.4**

(22) Date de dépôt : **04.03.91**

(54) **Procédé de présulfuration de catalyseurs de traitement d'hydrocarbures.**

(30) Priorité : **19.03.90 FR 9003596**

(43) Date de publication de la demande :
**25.09.91 Bulletin 91/39**

(45) Mention de la délivrance du brevet :
**06.10.93 Bulletin 93/40**

(84) Etats contractants désignés :
**BE DE GB IT LU NL**

(56) Documents cités :
**EP-A- 0 130 850**
**EP-A- 0 181 254**
**EP-A- 0 276 681**
**US-A- 4 177 136**

(73) Titulaire : **EUROPEENNE DE RETRAITEMENT DE CATALYSEURS (en abrégé EURECAT) Quai Jean Jaurès - Boite Postale 45 F-07800 LA VOULTE SUR RHONE (FR)**

(72) Inventeur : **Berrebi, Georges**
**17, rue Barnave**
**F-26500 Bourg les Valences (FR)**
Inventeur : **Le Gall, Bernard**
**15, rue du Général Voyron**
**F-07800 La Voulte Sur Rhone (FR)**

(74) Mandataire : **Andreeff, François et al INSTITUT FRANCAIS DU PETROLE 4, avenue de Bois-Préau F-92502 Rueil-Malmaison (FR)**

EP 0 448 435 B1

## Description

La présente invention concerne un procédé de présulfuration de catalyseur de traitement d'hydrocarbures et/ou de préconditionnement d'un catalyseur pour être ensuite sulfuré.

Il est souvent souhaitable de procéder à une sulfuration (généralement appelée "présulfuration") des métaux entrant dans la composition de certains catalyseurs de raffinage et/ou d'hydroconversion d'hydrocarbures soit lorsque ces catalyseurs sont neufs soit à l'issue de la régénération de ces catalyseurs avant de les réutiliser.

Une présulfuration des catalyseurs neufs ou régénérés est ainsi souhaitable pour l'emploi de ces catalyseurs dans les réactions de raffinage, par exemple les réactions de désulfuration ou d'hydrodésulfuration de diverses essences, par exemple des essences de craquage catalytique ou de craquage à la vapeur dont il convient, avant emploi, d'abaisser la teneur en soufre sans modifier l'indice d'octane de ces essences ou en le modifiant aussi peu que possible. De telles réactions de désulfuration sont généralement effectuées en présence d'hydrogène, la charge étant par exemple une essence distillant généralement entre (30 et 220 °C et pouvant posséder un indice de brome compris entre 40 et 80 (g/100 g), contenant environ 15 à 45 %, en volume, d'oléfines (essentiellement des monooléfines des quantités minimes de dioléfines) et 15 à 25 % d'hydrocarbures aromatiques. Ici, le catalyseur utilisé pour ce type de désulfuration ou d'hydrodésulfuration renferme un support généralement non acide, par exemple une alumine ou des mélanges d'alumine (brevet US-A-4 334 982) ou tout autre support adéquat à base d'au moins un oxyde d'un métal ou de métalloide (magnésie (US-A-4 132 632, US-A-4 140 626), silice, silice-aluminées, silicemagnésies, les silices-fluorées, les alumines bores, les argiles, les charbons, les alumines fluorées) ce ou ces mélanges de support pouvant au moins en partie se présenter sous forme amorphe ou sous forme cristallisée (zéolites) et le catalyseur renfermant en outre 0,2 à 30 % d'au moins un métal actif des groupes VI, VIII ou autre choisi par exemple dans le groupe constitué, par le cobalt, le molybdène, le nickel et le tungstène (US-A-3 732 155 et 3 804 748). On utilise généralement un couple de deux de ces métaux, par exemple l'un des couples cobalt-molydbène, nickel-molybdène, cobalt tungstène, tungstène-molybdène, cobalt-nickel, nickel-tungstène. On peut toujours à titre d'exemple utiliser un métal noble du groupe VIII de la famille du platine : Pt, Pd... (US-A-4 098 682).

Ainsi, avant d'être utilisé, le catalyseur, neuf ou régénéré, est soumis généralement dans l'art antérieur, à une sulfuration (présulfuration) effectuée dans le réacteur d'hydrodésulfuration. Cette sulfuration permet d'inclure dans le catalyseur, par exemple, 50 à 110 % environ des quantités stoechiométriques de soufre calculées sur les quantités de sulfure de formule (selon les métaux présents), $Co_9S_8$, $MoS_2$, $WS_2$ et $Ni_3S_2$.

Cette sulfuration (présulfuration) est effectuée dans l'art antérieur, à une température voisine ou plus élevée (ainsi supérieure à 180 °C et plus particulièrement au dessus de 250 °C) par rapport à la température réactionnelle choisie pour la réaction d'hydrodésulfuration au moyen d'un mélange d'hydrogène sulfuré généralement dilué dans de l'hydrogène (proportion d'hydrogène sulfuré dans l'hydrogène de l'ordre de 0.5 à 5 % en volume) avec une vitesse spatiale adéquate de l'ordre, par exemple, de environ 1.000 à 3.000 litres de gaz dans les conditions normales de température et pression par litre de catalyseur et par heure (US-A-4 334 982). La sulfuration (ou présulfuration) proprement dite peut être effectuée par palier de température (brevet français FR-B-2 476 118). On peut utiliser divers agents de sulfuration, autres que l'hydrogène sulfuré ($H_2S$) et par exemple un composé sulfuré de la famille des mercaptans, le sulfure de carbone ($CS_2$), des sulfures ou des disulfures, les composés thiophéniques et, de préférence le diméthylsulfure (DMS) et le diméthyldisulfure (DMDS).

Une sulfuration ou présulfuration de catalyseur régénéré est également souhaitable dans les réactions d'hydroreformage d'hydrocarbures (reforming notamment d'un naphta) et de production d'hydrocarbures aromatiques ("Aromizing") par exemple la production de benzène, de toluène et de xylènes (ortho, méta ou para), soit à partir d'essences insaturées ou non (par exemple des essences de pyrolyse, de craquage, en particulier de steam cracking -craquage à la vapeur-, ou de reformage catalytique), soit encore à partir d'hydrocarbures naphténiques capables par déshydrogénation de se transformer en hydrocarbures aromatiques.

Le catalyseur peut renfermer, par exemple, au moins un métal de la famille, c'est-à-dire un métal noble tel que platine, palladium, iridium, rhodium, ruthénium, osmium déposé sur un support adéquat (alumine, silice, silice-alumine, alumines fluorées, silices fluorées, zéolite, etc... ou des mélanges de tels supports). La teneur totale en métaux nobles est comprise par exemple entre 0,1 et 5 % en poids par rapport au catalyseur. Le catalyseur également peut renfermer généralement au moins un halogène ( chlore, fluor, etc... ) avec une teneur pondérale de 0 à 15 %. Eventuellement encore, le catalyseur renferme au moins un métal promoteur choisi dans les groupes les plus divers de la classification périodique des éléments, la teneur pondérale en métal promoteur variant par exemple entre 0,1 et 15 %. On peut citer ainsi les métaux des groupes VIII, VI A et VI B, I B et II B,III A, IV A, V A et V B, IV B, III B,I A et I B ainsi que les métaux de la famille des lanthanides : on citera plus particulièrement, outre les métaux du groupe VIII nobles ou non nobles, le cuivre, l'argent, l'or, le germanium, l'étain, l'indium, le thallium, le manganèse, le rhénium, le tungstène, le molybdène, le niobium et le titane.

Pour ces réactions de reformage catalytique ou de production d'hydrocarbures aromatiques, la sulfuration du catalyseur neuf ou régénéré est accompagnée d'une réduction à l'hydrogène de catalyseur et s'effectue en tête du réacteur ou au voisinage de la tête du réacteur. La température dans la zone de sulfuration est imposée par la température à laquelle s'effectue la réduction, soit généralement entre 480 et 600 °C dans la plupart des cas. La difficulté de ce type de sulfuration sur le site, c'est-à-dire au voisinage des réacteurs a entraîné des mises en oeuvre de sulfuration souvent fastidieuses quoiqu'efficaces (US-A-4 172 027).

L'agent de sulfuration utilisé est dans l'art antérieur soit de l'hydrogène sulfuré pur ou dilué par de l'hydrogène ou par des hydrocarbures gazeux, soit encore du diméthyldisulfure dilué par de l'hydrogène, ou d'autres composés sulfurés tels que des sulfures d'alkyle ou des alkylmercaptans, dilués par de l'hydrogéne. La pression utilisée est celle qui règne dans le réacteur de reforming ou de production d'hydrocarbures aromatiques, la durée de la réaction variant de quelques minutes à quelques jours selon les conditions opératoires choisies (voir US-A-4 172 027).

Une sulfuration (présulfuration) d'un catalyseur neuf ou régénéré convient encore, dans certains cas, pour la sulfuration partielle ou totale de catalyseur, également à base d'un des supports déjà cités et d'au moins un des métaux actifs déjà cités, utilisables dans des réactions, de conversions d'hydrocarbures telles que les réactions d'hydrogénation, de déshydrogénation, d'alkylation, d'hydroalkylation, de déalkylation, d'hydrodéalkylation, de déalkylation à la vapeur d'eau, d'isomérisation et d'hydrodémétallisation (ou démétallation) des charges lourdes.

La sulfuration ou présulfuration, lorsqu'elle est nécessaire peut s'opérer avantageusement selon l'une ou l'autre des techniques de l'art antérieur rappelées ci-dessus.

Une autre réaction de raffinage spécialement adaptable à ces types de présulfuration et en particulier à la présulfuration selon la présente invention est l'hydrocraquage.

L'hydrocraquage (comme d'ailleurs le craquage) de coupes pétrolières lourdes est un procédé très important du raffinage, qui permet de produire, à partir de charges lourdes excédentaires et peu valorisables, les fractions plus légères telles que essences, carburéacteurs et gazoles légers que recherche le raffineur pour adapter sa production à la structure de la demande. Par rapport au craquage catalytique, l'intérêt de l'hydrocraquage catalytique est de fournir des distillats moyens, carburéacteurs et gazoles, de très bonne qualité, (En revanche, l'essence produite présente un indice d'octane beaucoup plus faible que celle issue du craquage catalytique).

Les catalyseurs utilisés en hydrocraquage sont tous du type bifonctionnels associant une fonction acide à une fonction hydrogénante. La fonction acide est apportée par des supports de grandes surfaces (150 à 800 $m^2.g^{-1}$ environ) présentant une acidité superficielle, tels que les alumines halogénées (chlorées ou fluorées notamment), les combinaisons d'oxydes de bore et d'aluminium, les silice-alumines amorphes et les zéolites.

Les zéolites sont actuellement très appréciées. Elles sont utilisées seules ou en mélange avec une matrice amorphe.

Les zéolites acides présentent l'avantage par rapport aux autres supports acides précédemment cités, d'apporter une acidité beaucoup plus élevée. Les catalyseurs nouveaux qui les contiennent sont donc beaucoup plus actifs et pour cette raison, permettent de travailler à température plus basse et/ou à vitesse spatiale d'alimentation VVH plus élevée. En revanche, cette acidité plus élevée modifie l'équilibre entre les deux fonctions catalytiques, acide et hydrogénante. Il en résulte une modification de sélectivité notable de ces catalyseurs par rapport aux catalyseurs conventionnels : ils sont plus craquants et produisent par conséquent beaucoup plus d'essence que de distillats moyens. Mais ces désavantages ont trouvé des solutions décrites notamment dans EP-B-162733.

La fonction hydrogénante est apportée soit par un ou plusieurs métaux du groupe VIII de la classification périodique des éléments, tels que le nickel, le palladium ou le platine par exemple, soit par une association d'au moins deux métaux choisis parmi les groupes VI de la classification périodique, molybdène et tungstène notamment, et VIII de la même classification, cobalt et nickel notamment, deux au moins des métaux de cette association appartenant à deux groupes différents (VI et VIII précédemment cités).

Les charges employées en hydrocraquage sont des gas-oil, des gas-oil sous vide, des résidus désasphaltés ou hydrotraités ou équivalents. Elles sont consitutées au moins à 80 % en volume de composés dont les points d'ébullition sont situées entre 350 et 580 °C. Elles contiennent des hétéroatomes tels que soufre et azote. Les conditions de l'hydrocraquage telles que, température, pression, taux de recyclage d'hydrogène, vitesse volumique horaire, devront être adaptées à la nature de la charge, caractérisée notamment par la gamme des points d'ébullition, la teneur en aromatiques ou polyaromatiques, la teneur en hétéroatomes. Les teneurs en azote sont comprises généralement entre 5 à 2.000 ppm. et les teneurs en soufre entre 50 et 30.000 ppm.

La température est en général supérieure à 230 °C et souvent comprise entre 300 °C et 430 °C. La pression est supérieure à 15 bars et en général superieure à 30 bars. Le taux de recyclage d'hydrogène est au minimum de 100 et souvent compris entre 260 et 3 000 litres d'hydrogène par litre de charge. La vitesse volumique est comprise en général entre 0.2 et 10.

Les métaux des catalyseurs utlisés en raffinage, hydroraffinage ou en pétrochimie, qu'ils soient neufs ou régénérés, sont le plus souvent sous forme oxydée, parfois sous forme métallique (pour certains métaux des catalyseurs de reforming notamment). Or, les métaux de ces catalyseurs, n'étant souvent actifs que sous forme sulfurée ou au moins partiellement sulfurée, il est donc nécessaire au raffineur ou au pétrochimiste d'opérer une sulfuration du catalyseur préalablement à sa mise en oeuvre.

Actuellement, la régénération des catalyseurs se fait de plus en plus chez un specialiste de la régénération de catalyseurs, parfois loin de l'unité industrielle. Or, il parait raisonnable de penser à restituer au raffineur un produit prêt à l'emploi, ce qu'à permis le procédé efficace du brevet Européen EP-B-130 850 de la demanderesse dans lequel un composé sulfuré est incorporé dans la masse catalytique, lequel composé, provoque la sulfuration ou la présulfuration du catalyseur lorsque, ultérieurement, dans la zone réactionnelle (zone de traitement de la charge) ou à proximité immédiate de la zone réactionnelle, le catalyseur sera mis en contact d'hydrogène. Bien entendu, l'incorporation dudit composé sulfuré peut, si on le désire, être effectuée à proximité de l'unité industrielle ou même sur le lieu de traitement de catalyseur ; le procédé d'incorporation dudit composé sulfuré peut être effectué en hors site également sur un catalyseur neuf ou régénéré, avant sa mise en oeuvre dans l'unité industrielle.

D'une façon plus précise dans le brevet Européen EP-B-130 850, le procédé de sulfuration du catalyseur est donc caractérisé par une étape préliminaire dite d'incorporation dans la masse catalytique, d'un composé sulfuré de nature particulière.

L'étape préliminaire d'introduction d'un composé sulfuré qu'arbitrairement on appelle prétraitement "hors site" ou "ex situ", qu'elle soit effectuée à proximité du site de l'unité industrielle ou à distance plus ou moins grande géographiquement de l'unité industrielle (là où le catalyseur a été régénéré ou là où il a été fabriqué par exemple) ne se fait de toute façon plus au voisinage immédiat du réacteur (on écrit arbitrairement "in situ") c'est-à-dire en tête des réacteurs ou dans des zones plus au moins en communication directe avec ces réacteurs, nécessitant d'opérer dans des conditions opératoires, (de température, pression ou autres), imposées au moins en partie par les conditions opératoires des réacteurs eux-mêmes ou des annexes de ces réacteurs (zone d'hydrogénation préalable du catalyseur par exemple).

En résumé, le brevet Europeen EP-B-130 850 concerne un procédé, permettant, lorsque le catalyseur sera soumis dès son démarrage de préférence sur le site ("in situ") à la réaction classique d'activation en présence d'hydrogène (généralement au dessus de 100 °C), de procéder, ensuite grâce a la présence d'hydrogène sur le site, à la sulfuration au taux requis, stoechiométrique ou non stoechiométrique, du ou des métaux actifs entrant dans la composition du catalyseur. Ce procédé consiste à incorporer en l'absence d'hydrogène dans la porosité du catalyseur neuf ou régénéré au moins un agent de sulfuration de formule générale

$$R\text{-}S_{(n)}\text{-}R'$$

où R, R' et n sont définis ci-dessous.

La sulfuration du catalyseur peut ainsi être faite comme suit : dans une première étape réalisée "ex situ", en l'absence d'hydrogène, on traite le catalyseur à l'aide d'au moins un agent de sulfuration de façon à incorporer partiellement ou totalement cet agent dans la porosité du catalyseur, l'agent de sulfuration étant un polysulfure de formule générale :

$$R\text{-}S_{(n)}\text{-}R'$$

ledit agent de sulfuration étant utilisé en solution dans un solvant : dans une deuxième étape, réalisée "in situ", et de préférence au-dessus de 150 °C, on procédé à une étape d'activation du catalyseur effectuée en présence d'hydrogène, la quantité requise de soufre se fixant grâce à la présence d'hydrogène, sur le ou les métaux entrant dans la composition dudit catalyseur. Cette dernière étape est perfectionnée dans le brevet EP-B-181 254. L'objet de ces deux brevets est donc de conduire "ex situ" la présulfuration des catalyseurs en incorporant toute la quantité nécessaire de soufre et seulement la quantité nécessaire de soufre demandée par l'utilisateur. Les catalyseurs sont donc livrés à la raffinerie ou a toute autre unité, ainsi préconditionnés pour être sulfurés.

Le raffineur, ou tout autre utilisateur, n'a plus donc qu'à réactiver ce catalyseur en présence d'hydrogène à une température par exemple de 100 à 200 °C pour un catalyseur de désulfuration, de 400 à 600 °C environ, pour un catalyseur de reformage catalytique ou de production d'hydrocarbures aromatiques, afin de faire réagir le soufre sur les métaux contenus et démarrer aussitôt la réaction de raffinage ou de conversion d'hydrocarbures par injection de la charge à traiter.

Dans le polysulfure de formule:

$$R\text{ -}S_{(n)}\text{ - }R'$$

n est un nombre entier de 3 à 20, de préférence de 4 à 8 et plus particulièrement de 5 à 7, R et R', identiques ou différents, représentent des radicaux organiques renfermant chacun 1 à 150 atomes de carbone par molécule, de préférence soit 10 à 60 atomes de carbone soit 5 à 40 atomes de carbone et plus particulièrement 7 à 16, ces radicaux étant choisis dans le groupe constitué par les radicaux alkyles c'est-à-dire saturés ou insaturés, linéaires ou ramifiés ou de type naphténique, les radicaux aryles, les radicaux alkylaryles et les radicaux arylalkyles, ces divers radicaux pouvant comporter au moins un hétéroatome. R' éventuellement peut également être un atome d'hydrogène.

On peut citer, à titre d'exemple préféré de polysulfure, le ditertiododécylpolysulfure (n = 5) où R et R' sont chacun un radical tertio-dodécyle.

Ce produit est commercialisé par exemple par ELF AQUITAINE sous le nom de TPS 32, notamment parce qu'il contient 32 % poids environ de soufre.

On peut citer également le ditertiononylpolysulfre (n = 5) où R et R' sont chacun un radical tertio-nonyle.

Ce produit est commercialisé par ELF AQUITAINE sous le nom TPS 37, notamment parce qu'il contient 37 % poids environ de soufre ou par PENWALT sous le nom de TNPS.

Pour des raisons de procédure, on peut évidemment utiliser ces agents de sulfuration du type polysulfure seuls ou en mélange entre eux dans des proportions judicieusement choisies.

La première étape rappelée ci-dessus est effectuée en l'absence d'hydrogène et permet d'obtenir avec une très grande précision le degré de sulfuration total ou partiel demandé par l'utilisateur. Cette incorporation de soufre est effectuée entre 0 et 50 °C et de préférence entre 10 et 35 °C et de préférence encore à la température ambiante.

L'agent de sulfuration est utilisé, dilué dans un solvant adéquat qui dépend notamment de la nature de l'agent de sulfuration c'est-à-dire de R ou de R', radicaux qui déterminent la teneur en soufre incorporé dans le catalyseur généralement par capillarité ou par porosité. Les processus de sulfuration varient en fait selon les coupes à traiter ultérieurement en présence des catalyseurs traitées conformément à l'invention. Le solvant choisi peut être ainsi un des solvants suivants utilisés seuls ou en mélange ensemble :

- une essence légère bouillant par exemple entre environ 60 et 95 °C,
- une essence de type hexane bouillant entre 63 et 68 °C environ,
- une essence de type F bouillant entre environ 100 et 160 °C et, contenant généralement 10 à 20 % d'hydrocarbures aromatiques, par exemple 15 %, en volume,
- une essence de type "white spirit" bouillant entre environ 150 et 250 °C et renfermant généralement 14 à 22 % d'hydrocarbures aromatiques, par exemple 17 %, en volume,
- ou toute coupe hydrocarbonnée ou non, équivalente aux essences précédentes.

Ultérieurement, sur le site ou à proximité du site (sur lequel le catalyseur sera utilisé pour le traitement de diverses charges), lors de la réaction classique d'activation, effectuée en présence d'hydrogène (deuxième étape du procédé du brevet européen EP-B-130 850), l'agent de sulfuration introduit dans le catalyseur en quantité prédéterminée, sera capable de donner naissance à de l'hydrogène sulfuré lequel, en présence d'hydrogène, conduira au sulfure ou aux sulfures désirés du ou des métaux présents dans le catalyseur selon par exemple les réactions schématiques exothermiques (1) (2) (3) suivantes pour ce qui concerne, à titre d'exemples, les sulfurations du molybdène, du cobalt et du nickel :

$$(1) \ MoO_3 \text{------>} MoS_2$$
$$(2) \ 9 \ CoO \text{----->} Co_9S_8$$
$$(3) \ 3 \ NiO \text{----->} Ni_3S_2$$

L'emploi d'un solvant adéquat, dans lequel est dissous l'agent de sulfuration, permet de jouer sur la chaleur latente de vaporisation du solvant choisi donc d'absorber une partie au moins de l'exothermicité de la réaction de sulfuration.

A l'issue de dépôt de soufre, une partie au moins du solvant, reste dans le catalyseur. Il est donc possible d'éliminer ce solvant (par strippage à l'azote par exemple, ou par tout autre moyen). Mais ce solvant laissé dans le catalyseur peut s'éliminer ultérieurement et sans aucun dommage, dans le réacteur d'utilisation du catalyseur, c'est-à-dire sur le site ("in situ").

Dans la première étape, le volume de polysulfure et du solvant choisi doit de préférence représenter environ une valeur égale au volume poreux du lit de catalyseur à traiter : ainsi, à titre d'exemple, pour 100 g de catalyseur régénéré ou neuf (forme oxydée) il s'agit donc de mettre environ 9 grammes de soufre en polysulfure dans environ 45 cm³ de mélange total polysulfure plus solvant ( white spirit par exemple ). L'adsorption de ce polysulfure se fait généralement à l'air ambiant. Le catalyseur peut ensuite être éventuellement séché sous courant d'air chaud, puis conditionné pour être expédié, selon une méthode préférée, chez le raffineur.

Dans EP-B-181 254 de la demanderesse, on a découvert que pendant une première partie de ladite deuxième étape, la présence d'hydrogène non seulement n'est pas nécessaire mais qu'au contraire, son absence est même souhaitable, à la condition toutefois que pendant la fin de cette deuxième étape, effectuée ex situ ou in situ, et éventuellement en présence d'hydrogène, le catalyseur soit porté au moins une minute à une température au moins égale à 275 °C. La première partie de cette deuxième étape est effectuée in situ ou ex situ. Ainsi la première partie de la deuxième étape est effectuée en l'absence d'hydrogène sous atmosphère d'un gaz inerte (azote, argon, hélium, etc... ) ou d'un gaz non inerte ou d'un mélange de tels gaz, par exemple l'air, pendant environ au moins 5 minutes, entre 65 et 275 °C. D'une façon plus précise, si l'on opère en présence d'un gaz inerte, on choisira d'opérer de préférence pendant 1 à 3 heures environ, sous une pression comprise entre environ 0,5 à 70 bars (0,05 et 7MPa), à une température comprise entre 65 et 275 °C, de préférence entre 85 et 260 °C et plus particulièrement entre 95 et 150 °C. Si l'on choisit d'opérer en présence d'un gaz non inerte tel que l'air notamment, il conviendra d'opérer pendant environ 5 minutes (ou mieux 9 minutes ) à 10 heures, sous 0,5 à 70 bars ( 0,05 à 7MPa ), à une température inférieure à 200 °C et de préférence inférieure à 150 °C.

Si l'on travaille, sous air, à une température inférieure à 200 °C, on amorce la combustion du soufre fixé, qui se dégage sous forme de SO2 ; cela est contraire au but recherché, mais toutefois l'avantage de travailler sous air est économique du fait qu'il n'est plus utile d'utiliser des installations coûteuses nécessaires à l'emploi d'une atmosphère inerte.

Au cours de la deuxième partie de la deuxième étape, le catalyseur est porté soit à une température égale à au moins 275 °C, pendant au moins 1 minute, soit de préférence entre 300 et 400 °C lorsque la première partie de la deuxième étape est conduite entre 85 et 260 °C, pendant 1 et 3 heures, soit encore entre 275 et 380 °C, lorsque la première partie de la deuxième étape est effectuée en présence d'air, pendant 9 minutes à 10 heures, à une température inférieure à 150 °C. Cette deuxième partie de la deuxième étape peut être conduite en présence d'hydrogène.

La deuxième partie de la deuxième étape est généralement effectuée in situ et peut donc se confondre avec le démarrage ou la mise en marche proprement dite de la réaction de raffinage ou de pétrochimie pour laquelle est conçu le catalyseur préparé selon la présente invention, dans le cas précisément où une telle réaction est faite au dessus de 275 °C.

Lorsque la température choisie pour la réaction de raffinage ou de pétrochimie est inférieure à 275 °C (par exemple, ce peut être le cas des hydrodésulfurations d'essences ou de kérosènes), il suffit alors d'abaisser la température utilisée pour l'activation du catalyseur dans la deuxième partie de la deuxième étape après cette étape à la température convenable pour la réaction de raffinage ou de pétrochimie.

On a constaté que dans la première partie de la deuxième étape, en dépit de l'absence d'hydrogène, le catalyseur se sulfure, c'est-à-dire que les oxydes des métaux actifs du catalyseurs se transforment en sulfures selon les réactions chimiques données ci-dessus. Ce phénomène s'observe aisément par l'analyse du catalyseur, lequel d'ailleurs devient noir. Par contre, des tests de chimisorption montrent que tant que le catalyseur n'atteint pas la température de 275 °C et ne reste pas au moins quelques minutes à au moins 275 °C, ce catalyseur reste démuni d'activité catalytique.

A noter que le gaz utlisé dans la première partie de la deuxième étape peut être au moins en partie de la vapeur d'eau, surchauffée à 110 °C au moins : on peut également utiliser de l'air humide. Dans ce cas on peut par exemple opérer avec une humidité relative de l'ordre de 0 à 60 % en volume à l'étape de séchage, et/ou avec une préactivation conduite entre 105 et 200 °C, de préférence entre 110 et 170 °C, avec un gaz dont la teneur en eau est comprise entre 50 et 100 % (vapeur d'eau pure), de préférence entre 90 et 100 %.

Bref, au cours de la première partie de la deuxième étape, les oxydes des métaux actifs se transforment en sulfures, l'activité catalytique de ces sulfures ne se manifestant que lorsque le catalyseur atteindra 275 °C environ, éventuellement en présence d'hydrogène ( deuxième partie de la deuxième étape). Procéder ainsi fait apparaître immédiatement plusieurs avantages. La première partie de la deuxième étape étant effectuée en l'absence d'hydrogène, l'admission d'hydrogène est plus tardive que dans le procédé de la demande de brevet Européen EP-B-130 850 d'où ici une consommation moindre en hydrogène. La première partie de cette deuxième étape n'est plus exothermique ce qui est très appréciable, (notamment du point de vue sécurité), pour le raffineur, si cette première partie de la deuxième étape est effectuée in situ. A l'issue de la première partie de la deuxième étape, le catalyseur n'est absolument pas pyrophorique tant qu'il n'a pas atteint la température de 275 °C environ, c'est-à-dire est incapable d'absorber de l'oxygène ( processus exothermique à l'origne de la pyrophoricité des catalyseurs sulfurés ). Ce catalyseur est donc insensible a l'air et manipulable sans aucune précaution particulière. Donc si on le désire, cette première partie de deuxième étape (transformation des oxydes des metaux actifs en sulfures) peut être effectuée sur le site de la régénération ("ex-situ") et ensuite, le catalyseur, éventuellement préalablement séché, insensible à l'air, est transporté par camion ou par avion par exemple, non seulement présulfuré comme enseigné dans la demande de brevet européen EP-B-130 850 (soufre incorporé dans les pores du catalyseur sous forme de polysulfure organique) mais déjà sulfuré, depuis le site de régénération jusqu'à chez le raffineur ou chez le pétrochimiste, ces derniers n'ayant plus alors qu'à metre le catalyseur dans l'unité de raffinage ou de pétrochimie pour laquelle le catalyseur a été conçu, et porter le catalyseur à une température au moins égale à 275 °C, pendant au moins une minute, en y introduisant éventuellement de l'hydrogène ( indispensable de toute façon pour la suite du fonctionnement

6

de l'unité). A ce stade, d'autres avantages apparaissent aussi bien pour celui qui a effectué la régénération du catalyseur que pour l'utilisateur de catalyseur, dans le cas où la première partie de la deuxième étape est faite "ex situ" : au cours de cette première partie de la deuxième étape, le solvant dans lequel était dissous le polysulfure organique s'évapore, (white spirit par exemple). Donc ce solvant reste sur le site de régénération et est récupéré par celui qui a procédé à la régénération et à la présulfuration du catalyseur. Le raffineur ou le petrochimiste n'ont pas, eux de leur côté, à prévoir des conduites d'extraction de ce solvant. De même, l'eau qui peut se former dans les réactions de sulfuration des oxydes de métaux actifs, est éliminée sur le site de régénération et le raffineur ou le pétrochimiste n'ont pas à prévoir dans leurs unités, des conduites d'élimination d'eau.

Au cours de la deuxième partie de la deuxième étape (activation) le catalyseur devient alors susceptible d'adsorber de l'oxygène, donc d'activer les réactions de raffinage et de pétrochimie. Cette activation peut être effectuée in situ c'est-à-dire dans le réacteur de raffinage ou de pétrochimie mais également ex situ, si par exemple le souhait s'en fait sentir, ne serait ce que parce que, lorsque la réaction de raffinage se fait à basse température, le réacteur choisi pour une telle réaction n'a pas été construit pour supporter des températures élevées (contraintes mécaniques) ; et on a également constaté que lorsque le catalyseur subit le traitement de la présente invention, son activité était améliorée non seulement par rapport aux techniques de sulfurations classiques (par $H_2S$ par exemple) mais également par rapport à la technique de la demande de brevet européen EP-B 130 850. Ainsi d'une façon générale, l'activité d'un catalyseur est une valeur inversement proportionnelle au volume de catalyseur utilisé pour procéder à une réaction de raffinage. Or en opérant selon l'invention, on a constaté que pour obtenir une même reaction de raffinage, des performances identiques, on utilise environ 5 % en moins de volume de catalyseur par rapport au volume utilisé d'un catalyseur sulfuré par $H_2S$, et environ 2 % en moins de volume de catalyseur par rapport au volume utilisé d'un catalyseur sulfure selon la méthode de la demande de brevet européen EP-B-130 850.

On notera que pour effectuer cette deuxième partie de la deuxième étape, il peut être avantageux d'opérer à la fois en présence d'hydrogène et en présence d'une coupe liquide d'hydrocarbures : de preférence, par exemple, on utilisera une partie au moins de la coupe à traiter ultérieurement sur ledit catalyseur. Cette méthode permet, puisque la deuxième partie de la deuxième étape est légèrement exothermique, de profiter de la présence d'un liquide qui mouille le catalyseur, permettant ainsi une meilleure évaporation des calories. En outre cette technique permet d'améliorer les qualités du catalyseur.

Au cours de la première étape du procédé de traitement de catalyseur, on peut opérer l'incorporation "ex situ" du polysulfure dans la porosité du catalyseur, en présence d'au moins un additif possédant des propriétés de réducteur et qui est choisi dans le groupe constitué par les aldéhydes renfermant 4 à 14 atomes de carbone par molécule (et de préférence 5 à 12 atomes de carbone), les cétones ou polycétones renfermant 3 à 18 (et de préférence 5 à 12) atomes de carbone par molécule, les éthers renfermant 5 à 14 (et de préférence 6 à 12) atomes de carbone par molécule, les alcools ou polyalcools renfermant 5 à 14 (et de préférence 6 à 12 atomes de carbone par molecule) et les acides organiques ou polyacides renfermant 3 à 14 (et de préférence 6 à 12 atomes de carbone par molécule).

On utilisera, en poids, avantageusement 0,4 à 8 %, de préférence 0,8 à 4 % et plus particulièrement 0,9 à 3 % de l'additif ou des additifs choisis par rapport au poids du polysulfure ou des polysulfures utilisés.

Le ou les additifs peuvent être ajoutés, par exemple, avec la solution du ou des polysulfures utilisés, soit à l'état pur, soit dissous dans un solvant adéquat. Ce solvant peut être du même type que le solvant choisi pour dissoudre le polysulfure.

L'additif ou les additifs selon l'invention, peuvent être utilisés dans un autre solvant tel que, par exemple, les alcools (méthanol, éthanol, propanol, etc... ) ou d'autres liquides minéraux ou organiques connus pour dissoudre les aldéhydes, les cétones, les éthers, les alcools, polyalcools, acides et polyacides utilisables selon la présente invention.

Parmi les additifs préférés, on peut citer notamment l'acétyl acétone, la dicétone, l'acétonyl acétone, l'acide lactique et l'acide citrique.

Le rôle de l'additif utilisé, est de pouvoir augmenter, au cours de la première partie de la deuxième étape, le degré de réduction des oxydes métalliques, de réduire ces oxydes beaucoup plus vite, de favoriser ainsi la cinétique du remplacement d'oxygène par le soufre et de favoriser en outre la dispersion des métaux dans le catalyseur.

En conséquence, le démarrage des réactions proprement dites de raffinage ou d'hydroconversion se trouvera accélérée.

On a maintenant découvert et ceci fait l'objet de la présente invention que les qualités des méthodes décrites dans les brevets EP-B-130 850 et EP-B 181 254 de la demanderesse sont encore améliorées si on utilise non pas le polysulfure organique seul mais en mélange, dans des quantités critiques, avec du soufre élémentaire. L'utilisation de soufre élémentaire pour la présulfuration de catalyseurs est décrite dans le brevet US-A-417 7136 mais les résulats obtenus sont assez décevants quoique corrects.

Or curieusement l'emploi finalement déconseillé de soufre élémentaire seul (démarrage trop rapide, encrassage, etc... ), apporte une synergie dans la présulfuration hors site quand ce soufre élémentaire est employé en mélange avec un polysulfure organique.

Le soufre élémentaire est utilisé par exemple sous forme de soufre fondu, de soufre en poudre, en fleur de soufre, selon toute méthode adéquate, par exemple celle décrite dans le brevet de la demanderesse EP-B-153 233.

Exemple 1 :

On se propose de présulfurer un catalyseur de raffinage à base d'une zéolite et d'une matrice d'alumine.
Le catalyseur a la composition pondérable suivante :
- 13 % zéolite,
- 5 % NiO
- 18 % $MoO_3$
- 64 % alumine.

L'alumine est une pseudo-boehmite obtenue par hydrolyse d'un acoolate d'aluminium.

La zéolite utilisée a été préparée selon une technique décrite dans EP-B 162 733 à partir d'une zéolite NaY de formule $NaAlO_2$ $(SiO_2)_{2,5}$ dont les caractéristiques sont les suivantes :
- rapport $SiO_2/Al_2O_3$ molaire : 5
- paramètre cristallin : 24.69 x $10^{-10}$ m
- capacité d'adsorption de vapeur d'eau à 25 °C (à P/Po : 0.1) : 26 %
- surface spécifique : 880 m2/g

Cette zéolite NaY est soumis à deux échanges dans des solutions de chlorure d'ammonium de façon à ce que le taux de sodium soit de 2.6 %, Le produit est ensuite introduit dans un four froid et calciné sous air jusqu'à 400 °C. A cette température on introduit dans l'atmosphère de calcination un débit d'eau correspondant, après vaporisation, à une pression partielle de 50.661 Pa. La température est alors portée à 565 °C pendant 2 heures. Le produit est ensuite soumis à un échange avec une solution de chlorure d'ammonium suivi d'un traitement acide très ménagé aux conditions suivantes : volume d'acide chlorhydrique 0.4 N sur poids de solide de 10, temps de 3 heures. Le taux de sodium baisse alors jusqu'à 0.6 %, le rapport $SiO_2/Al_2O_3$ est de 7,2. Ce produit est alors soumis à une calcination brutale en atmosphère statique à 780 °C pendant 3 heures, puis à nouveau repris en solution acide par l'acide chlorhydrique de normalité 2 et un rapport volume de solution sur poids de zéolite de 10. Le paramètre cristallin est de 24.28 x $10^{-10}$ m, la surface spécifique de 825 m2/g, la capacité de reprise en eau de 11,7, la capacité de reprise en ions sodium de 1.0.

On se propose de présulfurer le catalyseur décrit ci-dessus par les 6 techniques ou essais suivants :
1. Présulfuration par TPS pur (il s'agit de TPS 37 fabriqué par Elf Aquitaine et renfermant environ 37 % en poids de soufre, la formule a été donnée dans la partie générale de cette demande de brevet), 100 % du soufre provient du TPS.
2. Présulfuration par un mélange de TPS et de soufre élémentaire en fleur et où 25 % poids du soufre provient du soufre élémentaire en fleur.
3. Présulfuration par un mélange de TPS et de soufre élémentaire en fleur et où 50 % poids du soufre actif provient du soufre élémentaire en fleur.
4. Présulfuration par un mélange de TPS et de soufre élémentaire en fleur et où 65 % poids du soufre provient du soufre élémentaire en fleur,
5. Présulfuration par un mélange de TPS et de soufre élémentaire en fleur et où 75 % poids du soufre provient du soufre élémentaire en fleur,
6. Présulfuration par du soufre élémentaire en fleur, sans TPS.

La quantité de soufre nécessaire pour la sulfuration stoechiométrique des oxydes de nickel et molybdène entrant dans la composition du catalyseur correspond sensiblement à une teneur en soufre élémentaire de 8.8 % en poids de la masse catalytique : dans les 6 essais, en raison de diverses pertes possibles en soufre au cours des manipulations, on opère avec des quantités théoriques nécessaires de soufre et/ou de TPS pour conférer à la masse catalytique une teneur pondérale en soufre de 11 %.

Pour la présulfuration du catalyseur par du TPS 37 (premier essai), on opère selon la méthode du brevet européen EP-B-181 254 en deux étapes :

Première étape :

Pour que l'ensemble du polysulfure soit adsorbé, il faut utiliser un volume de réactif (polysulfure + solvant du polysulfure) égal au volume d'imprégnation de la charge de catalyseur traité. C'est la connaissance de ce volume poreux total, ou volume d'imprégnation, qui détermine la quantité de solvant à utiliser. Dans le cadre du présent essai, ce volume, pour 100 g de catalyseur, est de 45 ml en moyenne (dont environ 60 % de solvant et environ 40 % de polysulfure). Le solvant utilisé est un White Spirit (température d'ébullition entre 150 et 250 °C).

On utilise comme indiqué precédemment un léger excés par rapport à la stoechiométrie en soufre nécessaire pour sulfurer ultérieurement la totalité des oxydes (NiO, $MoO_3$). On procède ainsi à l'imprégnation à sec du catalyseur, suivie d'une évaporation sous 10 mm de mercure (13 600 Pa) ou sous courant de gaz inerte.

Deuxième étape :

1. Première partie de la deuxième étape :

Le catalyseur est introduit dans le réacteur. On met le réacteur sous la pression d'un bar en présence d'un mélange de 5 % en volume d'air et de 95 % en volume de vapeur d'eau initialement surchauffée à 115 °C, (On obtiendrait les mêmes résultats sous une pression plus élevée, par exemple 60 bars). On chauffe le catalyseur pendant 1 heure.

2. Deuxième partie ultérieure de la deuxième étape réalisée par exemple sur le site ("in situ") :

On met le réacteur sous atmosphère d'hydrogène, a froid. La pression est portée a 60 bars et la température à 150 °C.

Les tests d'hydroraffinage sont effectués. Il sera indiqué ci-après comme suit.

Pour la présulfuration du catalyseur par des mélanges de TPS et de soufre élémentaire en fleur (essais 2, 3, 4 et 5), on opère comme dans le premier essai en mélangeant le soufre en fleur avec le catalyseur et en imprégnant ce mélange avec le TPS 37.

Pour la présulfuration du catalyseur par du soufre élémentaire seul (essai n° 6) on peut par exemple, placer le catalyseur dans un tube et le recouvrir de soufre en poudre, chauffer le tube vers 120 °C, pendant au moins 30 minutes de façon à ce que le soufre fondu soit absorbé dans les pores du catalyseur.

D'une façon générale, l'adjonction de soufre que celui-ci soit utilisé seul (essai 6) ou soit utilisé avec un polysulfure organique (essais 2, 3, 4 et 5) pourrait se faire soit dans une partie de l'installation proche de l'alimentation de l'imprégnateur, soit directement sur le catalyseur dans le four, soit pendant l'imprégnation du catalyseur par le polysulfure, soit dans l'imprégnat lui-même, ou en suspension dans l'eau.

Le tableau suivant n° 1 donne quelques caractéristiques des catalyseurs obtenus après les 6 essais de présulfuration.

Le pourcentage de carbone déposé sur le catalyseur présulfuré provient du polysulfure organique mais également du White Spirit utilisé pour l'imprégnation de ce polysulfure. Le pourcentage de carbone déposé sur le catalyseur est donc faible dans le cas où l'on utilise du soufre élémentaire seul (essai 6) puisque l'essentiel du carbone provient des atomes de carbone du polysulfure. Les raffineurs admettent qu'une teneur en C % de l'ordre de 4 % à 8 % est tolérable. Les valeurs C % dans les essais 2, 3, 4 et 5 (mélanges polysulfure-soufre élémentaire sont donc parfaitement acceptables et en particulier les valeurs des essais 3, 4 et 5).

Le pourcentage de soufre déposé sur le catalyseur devrait être 8,8 %, cette valeur correspondant à la stoechiométrie. Les valeurs obtenues dans les 4 essais (2, 3, 4 et 5) où l'on utilise des mélanges de TPS et de soufre élémentaire sont nettement meilleures que celles obtenues en utilisant le TPS seul (essai 1) ou le soufre élémentaire seul (essai 6). Les valeurs obtenus dans les essais 3 (50 % TPS - 50 % soufre élémentaire) 4 (35 % TPS - 65 % soufre élémentaire) et l'essai 5 (25 % TPS, 75 % soufre élémentaire) sont bonnes.

Les valeurs de la perte au feu (P.A.F.) à 550 °C sont données pour information et n'appellent pas de commentaires particuliers.

Les valeurs, indiquées ensuite dans ce tableau, de la teneur pondérale en soufre, après extraction par solvant, correspondent à la quantité de soufre qui reste sur le catalyseur après une manipulation qui se produit parfois chez certains raffineurs et qui consiste à démarrer l'opération de raffinage en phase liquide.

L'introduction brutale du solvant dans ce type de fonctionnement de l'unité se traduit par l'élimination de tout ou partie du soufre imprégné sur le catalyseur. Ainsi on constate dans le tableau 1 que dans une telle manipulation, il ne reste pratiquement plus de soufre lorsque celui-ci est introduit à l'aide du soufre élémentaire (essai 6), qu'il en reste un tiers environ en introduisant du soufre à l'aide de TPS et que curieusement il en reste des quantités convenables lorsqu'on a introduit le soufre à l'aide de mélanges de TPS et de soufre élémentaire (essais 2, 3, 4 et 5) avec une préférence pour les essais 3, 4 et 5.

Par ailleurs, on a étudié le comportement thermique sous hydrogène des 3 lots de catalyseurs présulfurés selon les techniques des essais 1 (présulfuration par TPS seul) 4 (présulfuration par mélange TPS et soufre élémentaire) et 6 (présulfuration par soufre élémentaire seul). Chaque lot a été progressivement chauffé de la température ambiante à 450 °C environ.

Ces études de comportement thermique se traduisent pour chaque lot par 3 courbes qui représentent :
- l'analyse thermogravimétrie (courbe TG),
- la dérivée de l'analyse thermogravimétrie (courbe DTG),
- l'analyse thermique différentielle (courbe DTA).

Pour chacun des 3 lots, on observe des exothermes qui se situent selon les lots entre 200 et 250 °C et qui traduisent l'activation du catalyseur. A ce stade, il y a perte de poids par perte d'eau correspondant à la transformation des oxydes en sulfures. C'est à ce stade que se produit l'activation. Ces activations sont réalisées ici sous atmosphère d'hydrogène et à 1 bar (industriellement la pression est de l'ordre de 100 bars, à titre d'exemple).

On constate en particulier une exothermie à 200 °C dans la courbe TG du TPS 100 %.

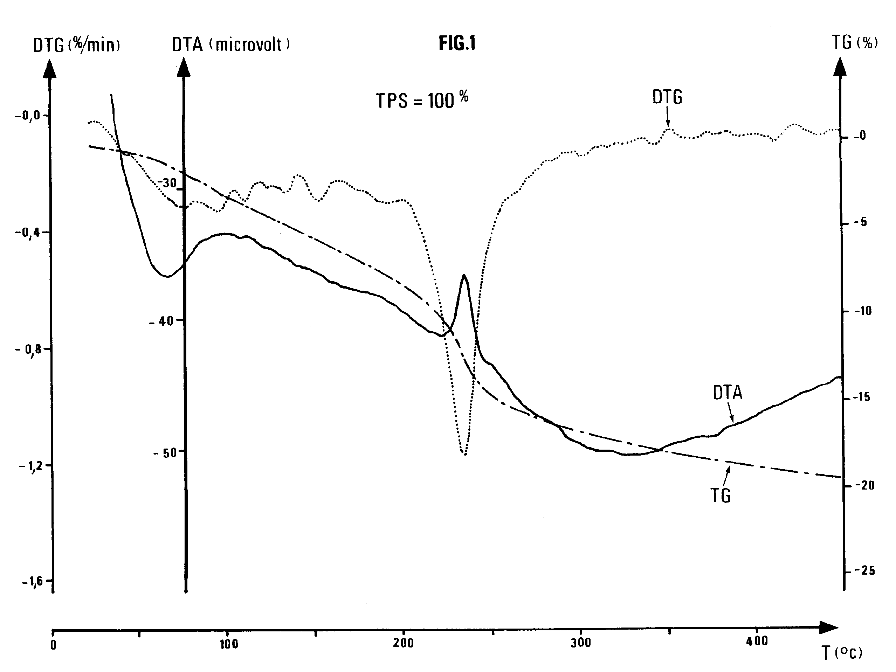

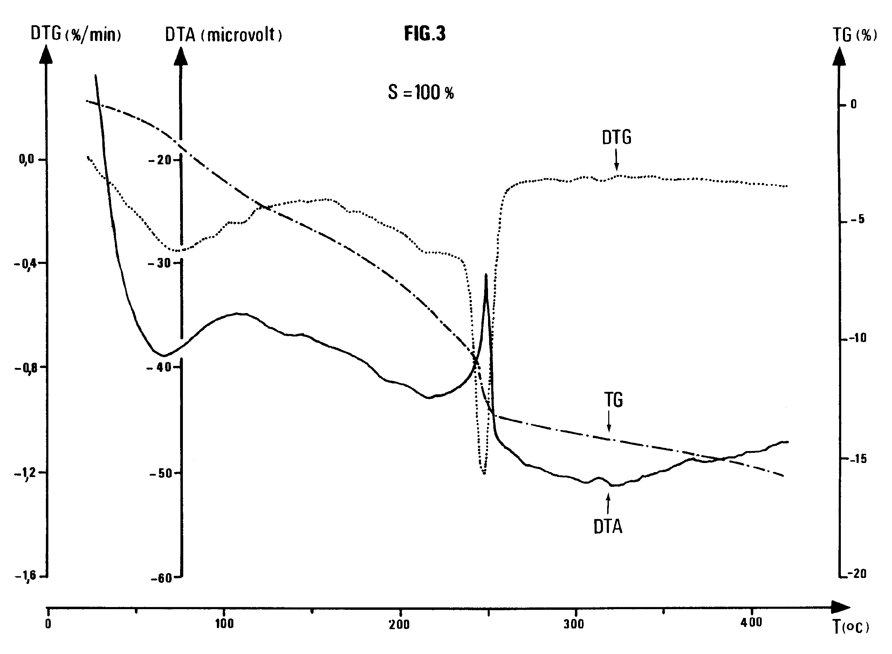

Mais on notera surtout le caractère très rapide de l'exothermie obtenue dans le catalyseur imprégné de soufre élémentaire seul, (Comparer dans la figure 3 (soufre seul), le pic relativement important dans la courbe DTA par rapport aux pics correspondants des courbes DTA dans les figures 1 (TPS seul) et 2 (mélange TPS et soufre)). Cela s'observe très nettement au laboratoire, où au cours de la manipulation du catalyseur il a été constaté une projection de catalyseur sur les bords du creuset d'analyse (réaction donc violente qui fait mieux apparaître également l'intérêt d'utiliser un mélange adéquat de polysulfure organique et de soufre élémentaire).

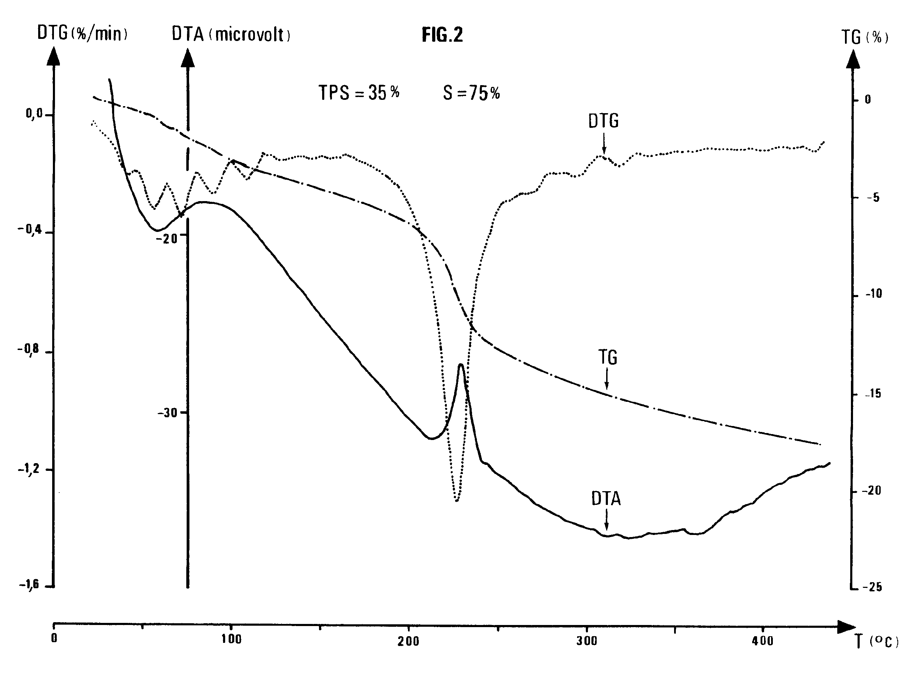

Sur les figures 1, 2 et 3, les unités pour les ordonnées des courbes DTG représentent des % poids par minute, celles des DTA sont des microvolts.

Conformément à l'invention on utilisera de préférence un mélange de polysulfure et de soufre élémentaire renfermant en poids par rapport au dit mélange, 10 à 75 % de soufre provenant du polysulfure, plus avantageusement 20 à 60 % de soufre provenant du polysulfure et plus particulièrement 25 à 50 % de soufre provenant du polysulfure.

TABLEAU I

| | ESSAI 1 | ESSAI 2 | ESSAI 3 | ESSAI 4 | ESSAI 5 | ESSAI 6 |
|---|---|---|---|---|---|---|
| C % en poids sur le catalyseur présulfuré....... | 4.27 | 3.91 | 3.28 | 3.30 | 3.38 | < 0.01 |
| S % en poids sur le catalyseur présulfuré....... | 7.72 | 8.39 | 8.82 | 8.90 | 8.60 | 8.22 |
| PAF % poids (perte au feu a 500 °C).......... | 15.20 | 16.60 | 16.00 | 16.20 | 16.70 | 12.40 |
| S % poids après extraction par solvant....... | 3 | 4.12 | 5.28 | 5.92 | 4.82 | 0.45 |

Conditions des essais : composition des mélanges utilisés pour la présulfuration.

ESSAI 1 :    soufre provenant du TPS : 100 %
ESSAI 2 :    soufre provenant du TPS : 75 %
            soufre élémentaire : 25 %
ESSAI 3 :    soufre provenant du TPS : 50 %
            soufre élémentaire : 50 %
ESSAI 4 :    soufre provenant du TPS : 35 %
            soufre élémentaire : 65 %
ESSAI 5 :    soufre provenant du TPS : 25 %
            soufre élémentaire : 75 %
ESSAI 6 :    soufre provenant du TPS : 100 %

Exemple 2 :

Chacun des 6 lots de catalyseur utilisés dans les essais 1 à 6 du tableau a été testé dans une réaction d'hydrocraquage.

Conditions du test d'hydrocraquage :

Le catalyseur dont la préparation a été décrite est utilisé dans les conditions d'hydrocraquage sur une charge dont les caractéristiques suivent :

```
charge point initial : 318

      point 10 %      : 378

      point 50 %      : 431

      point 90 %      : 467

      point final     : 494
               20
      densité d       :   0,854
              4

   N (ppm)            : 980

   % S                :   1,92
```

L'unité de test catalytique comprend un réacteur en lit fixe monté en "up flow" où sont introduits 60 ml de catalyseur. La pression est de 120 bars, le recyclage de 1.000 litres par litre de charge, la vitesse volumique horaire de 1.

Les catalyseurs ont été comparés à conversion voisine de 78,1 % à 360 °C.

La conversion est définie comme étant la fraction de la recette à point d'ébullition inférieur à 380 °C.

La sélectivité est définie comme étant la fraction de la recette à points d'ébullition compris entre 150 et 380 °C, ramenée à la conversion.

Les résultats sont présentées dans le tableau II.

EP 0 448 435 B1

TABLEAU II

```
-------------------------------
(    N° d'essai    :              )
(  d'où provient  :  Sélectivité )
(  le catalyseur  :              )
(-----------------:--------------)
(        1        :     77.6     )
(        2        :     79.3     )
(        3        :     80.7     )
(        4        :     80.8     )
(        5        :     80.2     )
(        6        :     62.2     )
(                 :              )
-------------------------------
```

En répétant tous les exemples précédents avec le ditertiododécylpolysulfure, on a obtenu sensiblement les mêmes résultats qu'en utilisant le ditertiononylpolysulfure.

## Revendications

1. Procédé de traitement d'un catalyseur neuf ou régénéré renfermant un support à base d'au moins un oxyde d'un métal ou d'un métalloide et au moins un métal actif, réalisé en l'absence d'hydrogène et consistant à traiter ledit catalyseur à l'aide d'au moins un agent de sulfuration utilisé en solution dans un solvant, ledit agent ayant la formule :

$$R - S_{(n)} - R'$$

   où n est un nombre entier de 3 à 20 et où les radicaux R et R', identiques ou différents, représentent chacun un radical organique renfermant 1 à 150 atomes de carbone par molécule, ces radicaux étant choisis dans le groupe constitué par les radicaux alkyles, saturés ou insaturés, linéaires ou ramifiés, ou de type naphténique, les radicaux aryles, les radicaux alkylaryles et les radicaux arylalkyles, R' pouvant aussi représenter l'atome d'hydrogène, le procédé étant caractérisé en ce que l'on ajoute du soufre élémentaire au dit agent de sulfuration.

2. Procédé selon la revendication 1 de traitement d'un catalyseur neuf ou régénéré, renfermant un support à base d'au moins un oxyde d'un métal ou d'un métalloïde et au moins un métal actif, en vue d'effectuer ultérieurement, en présence d'hydrogène, la sulfuration totale ou partielle, c'est-à-dire, en quantités stoechiométriques ou non, du ou des métaux dits actifs entrant dans la composition du catalyseur, le procédé étant caractérisé en ce que le catalyseur, neuf ou régénéré, est traité "ex-situ" à l'aide d'au moins un mélange de soufre élémentaire et un agent de sulfuration que l'on introduit entre 0 et 50 °C en quantités requises dans la porosité du catalyseur ledit agent ayant la formule générale :

$$R - S_{(n)} - R'$$

3. Procédé selon l'une des revendications 1 et 2 de sulfuration partielle ou totale d'un métal actif ou d'au moins un des métaux actifs entrant dans la composition d'un catalyseur renfermant (a) un support à base d'au moins un oxyde d'un métal ou d'un métalloide et (b) au moins un métal dit actif, le procédé de sulfuration étant caractérisé en ce que dans une première étape réalisée "ex situ" et en l'absence d'hydrogène, on traite le catalyseur à l'aide d'au moins un mélange de soufre élémentaire et d'au moins un agent de sulfuration de façon à incorporer partiellement ou totalement cet agent dans la porosité du catalyseur, l'agent de sulfuration étant un polysulfure de formule générale :

$$R - S_{(n)} - R'$$

   où n est un nombre entier de 3 à 20 et où R' représente un atome d'hydrogène ou un autre radical identique ou différent du radical R, ces deux radicaux représentant ainsi chacun un radical organique renfermant 1 à 150 atomes de carbone par molécule, ces radicaux étant choisis dans le groupe constitué par les radicaux alkyles c'est-à-dire saturés ou insaturés linéaires ou ramifiés ou de type naphténique, les radicaux aryles, les radicaux alkylaryles et les radicaux arylalkyles, ledit agent de sulfuration étant utilisé en solution dans un solvant, et en ce que dans une deuxième étape réalisée "in situ", qui est l'étape d'activation

12

du catalyseur effectué en présence d'hydrogène, on traite le catalyseur obtenu en première étape par de l'hydrogène pour fixer la quantité requise de soufre sur le ou les métaux entrant dans la composition dudit catalyseur.

4. Procédé selon la revendication 3 dans lequel la deuxième étape, dite d'activation du catalyseur et réalisée in situ, est effectué au moyen d'hydrogène auquel on ajoute environ 0,1 à 1 % d'eau en volume.

5. Procédé de traitement en deux étapes d'un catalyseur neuf ou régénéré renfermant (a) un support à base d'au moins un oxyde d'un métal ou d'un métalloïde et (b) au moins un métal actif, procédé dans lequel, dans une première étape réalisée "ex situ" entre 0 et 50 °C environ et en l'absence d'hydrogène, on traite le catalyseur à l'aide d'au moins un agent de sulfuration de façon à incorporer partiellement ou totalement cet agent dans la porosité du catalyseur, l'agent de sulfuration étant un polysulfure de formule générale :

$$R - S_{(n)} - R'$$

où n est un nombre entier de 3 à 20 et où R' représente un atome d'hydrogène ou un autre radical identique ou différent du radical R, ces deux radiaux représentant ainsi chacun un radical organique renfermant 1 à 150 atomes de carbone par molécule, ces radicaux étant choisis dans le groupe constitué par les radicaux alkyles c'est-à-dire staturés ou insaturés linéaires ou ramifiés ou de type naphténique, les radicaux aryles, les radicaux alkylaryles et les radicaux arylalkyles, ledit agent de sulfuration étant utilisé en solution dans le solvant, le catalyseur étant ensuite éventuellement séché, procédé dans lequel ensuite, dans une deuxième étape, on traite le catalyseur obtenu en première étape par une méthode caractérisée en ce que (a) on traite (première partie de la deuxième étape) le catalyseur, en l'absence d'hydrogène et en présence d'un gaz inerte ou d'un gaz non inerte, pendant au moins 5 minutes environ, "in situ" ou "ex situ", à une température comprise entre 65 et 275 °C, sous une pression comprise entre environ 0,5 et 70 bars, le catalyseur étant à ce stade éventuellement séché, (b) on traite ensuite ce catalyseur (deuxième partie de la deuxième étape), pendant au moins 1 minute à une température d'au moins 275 °C, en présence ou non de la charge à traiter, le procédé étant caractérisé en ce que l'on ajoute du soufre élémentaire au dit agent de sulfuration.

6. Procédé selon la revendication 5 dans lequel au cours de ladite première partie de la deuxième étape, on opère en présence d'un gaz inerte, la température étant comprise entre 75 et 275 °C.

7. Procédé selon la revendication 5 dans lequel au cours de ladite première partie de la deuxième étape, on opère en présence d'air, pendant une période de temps comprise entre 5 minutes et 10 heures, à une température inférieure à 200 °C.

8. Procédé selon la revendication 5 dans lequel ledit gaz est au moins en partie de la vapeur d'eau surchauffée à une température supérieure à 110 °C.

9. Procédé selon la revendication 7 dans lequel le gaz est de l'air humide.

10. Procédé selon l'une des revendications 1 à 9 dans lequel l'agent de sulfuration est le ditertiododécylpolysulfure ou le ditertiononylpolysulfure.

11. Procédé selon l'une des revendications 1 à 10 appliqué soit au traitement d'un catalyseur neuf, préalablement à son emploi, soit appliqué au traitement d'un catalyseur, préalablement à son emploi, ledit catalyseur venant d'être soumis à une régénération hors site.

12. Procédé selon l'une des revendications 1 à 11 dans lequel dans la formule R-S_{(n)}-R', n est un nombre entier compris entre 4 et 8, R et R' renfermant chacun 5 à 40 atomes de carbone par molécule.

13. Procédé selon l'une des revendications 1 à 12 caractérisé en ce que, en première étape, l'on opère en présence de 0,4 à 8 % en poids par rapport au poids de polysulfure d'au moins un additif choisi dans le groupe constitué par les aldéhydes renfermant 4 à 14 atomes de carbone par molécule, les cétones ou polycétones renfermant 3 à 18 atomes de carbone par molécule, les éthers renfermant 5 à 14 atomes de carbone par molécule, les alcools ou les polyalcools renfermant 5 à 14 atomes de carbone par molécule et les acides ou les polyacides organiques renfermant 3 à 14 atomes de carbone par molécule.

14. Procédé selon l'une des revendications 1 à 13 dans lequel la teneur pondérale en soufre provenant du polysulfure représente 10 à 75 % par rapport au mélange polysulfure-soufre élémentaire.

**15.** Procédé selon la revendication 14 dans lequel ladite teneur est comprise entre 20 et 60 %.

**16.** Procédé selon la revendication 15 dans lequel ladite teneur est comprise entre 25 et 50 %.

**Claims**

**1.** Process for the treatment of a new or regenerated catalyst containing a support based on at least one oxide of a metal or a non-metal and at least one active metal, carried out in the absence of hydrogen and consisting of treating the catalyst with the aid of at least one sulphurizing agent used in solution in a solvent, said agent having the formula:

$$R - S(n) - R'$$

in which n is an integer from 3 to 20 and in which the radicals R and R', which can be same or different, in each case represent an organic radical containing 1 to 150 carbon atoms per molecule, said radicals being chosen in the group constituted by saturated or unsaturated, straight or branched-chain, or naphthene-type alkyl radicals, aryl radicals, alkylaryl radicals and arylalkyl radicals, whilst R' can also represent the hydrogen atom, said process being characterized in that elementary sulphur is added to the said sulphurizing agent.

**2.** Process according to claim 1 for the treatment of a new or regenerated catalyst, containing a support based on at least one oxide of a metal or a non-metal and at least one active metal, with a view to subsequently carrying out, in the presence of hydrogen, partial or total sulphurization, i.e. in stoichiometric or non-stoichiometric quantities of the active metal or metals entering into the composition of the catalyst, the process being characterized in that the new or regenerated catalyst is treated ex situ with the aid of at least one mixture of elementary sulphur and a sulphurizing agent which is introduced at between 0 and 50°C and in the requisite quantities into the porosity of the catalyst, said agent having the general formula:

$$R - S(n) - R'$$

**3.** Process according to either of the claims 1 and 2 for the partial or total sulphurization of an active metal or at least one of the active metals used in the composition of a catalyst containing (a) a support based on at least one oxide of a metal or a non-metal and (b) at least one active metal, the sulphurization process being characterized in that, in a first stage performed ex situ and in the absence of hydrogen, the catalyst is treated with the aid of at least one mixture of elementary sulphur and at least one sulphurizing agent, so as to partly or totally incorporate said agent into the porosity of the catalyst, the sulphurizing agent being a polysulphide of general formula:

$$R - S(n) - R'$$

in which n is an integer from 3 to 20 and in which R' represents a hydrogen atom or another radical identical to or different from the radical R, so that said two radicals in each case represent an organic radical containing 1 to 150 carbon atoms per molecule, said radicals being chosen in the group constituted by alkyl radicals, i.e. saturated or unsaturated, straight or branched-chain or of the naphthene type, aryl radicals, alkylaryl radicals and arylalkyl radicals, said sulphurizing agent being used in solution in a solvent, and in that in a second stage performed in situ and which constitutes the activation stage of the catalyst performed in the presence of hydrogen, the catalyst obtained in the first stage is treated by hydrogen in order to fix the requisite sulphur quantity on the metal or metals entering the composition of said catalyst.

**4.** Process according to claim 3, in which the second stage of in situ catalyst activation is performed by means of hydrogen, to which is added approximately 0.1 to 1% by volume of water.

**5.** Process for the two-stage treatment of a new or regenerated catalyst containing (a) a support based on at least one oxide of a metal or a non-metal and (b) at least one active metal, wherein in a first stage performed ex situ at between approximately 0 and 50°C and in the absence of hydrogen, the catalyst is treated with the aid of at least one sulphurizing agent, so as to partly or totally incorporate said agent into the porosity of the catalyst, the sulphurizing agent being a polysulphide of general formula:

$$R - S(n) - R'$$

in which n is an integer from 3 to 20 and in which R' represents a hydrogen atom or another radical, the same or different to the radical R, said two radicals consequently representing in each case an organic radical containing 1 to 150 carbon atoms per molecule, said radicals being chosen from the group constituted by alkyl radicals, i.e. saturated or unsaturated, straight or branched-chain or naphthene type, aryl radicals, alkylaryl radicals and arylalkyl radicals, said sulphurizing agent being used in solution in the solvent, the catalyst then optionally being dried and wherein, in a second stage, the catalyst obtained in the first stage is treated by a method characterized in that (a) the catalyst is treated (first part of the second stage), in the absence of hydrogen and in the presence of an inert or a non-inert gas, for at least approximately 5 minutes, in situ or ex situ, at a temperature between 65 and 275°C and under a pressure between approximately 0.5 and 70 bars, said catalyst being optionally dried at said stage and (b), said catalyst is then treated (second part of the second stage), for at least 1 minute at a temperature of at least 275°C, in the presence or absence of the charge to be treated, the process being characterized in that elementary sulphur is added to said sulphurizing agent.

6. Process according to claim 5, wherein during the said first part of the second stage, working takes place in the presence of an inert gas, the temperature being between 75 and 275°C.

7. Process according to claim 5, wherein, during the first part of the second stage, working takes place in the presence of air, for a time between 5 minutes and 10 hours and at a temperature below 200°C.

8. Process according to claim 5, wherein said gas is at least partly steam superheated to a temperature above 110°C.

9. Process according to claim 7, wherein the gas is moist air.

10. Process according to any one of the claims 1 to 9, wherein the sulphurizing agent is ditert dodecyl polysulphide or ditert nonyl polysulphide.

11. Process according to any one of the claims 1 to 10 applied either to the treatment of a new catalyst, prior to its use, or applied to the treatment of a catalyst, prior to its use, said catalyst having undergone an ex situ regeneration.

12. Process according to any one of the claims 1 to 11, wherein in the formula R-S(n)-R', n is an integer between 4 and 8, R and R' in each case contain 5 to 40 carbon atoms per molecule.

13. Process according to any one of the claims 1 to 12, characterized in that, in the first stage, working takes place in the presence of 0.4 to 8% by weight, based on the polysulphide weight, of at least one additive chosen from the group constituted by aldehydes containing 4 to 14 carbon atoms per molecule, ketones or polyketones containing 3 to 18 carbon atoms per molecule, ethers containing 5 to 14 carbon atoms per molecule, alcohols or polyalcohols containing 5 to 14 carbon atoms per molecule and organic polyacids or acids containing 3 to 14 carbon atoms per molecule.

14. Process according to any one of the claims 1 to 13, wherein the weight content of the sulphur coming from the polysulphide represents 10 to 75%, based on the polysulphide-elementary sulphur mixture.

15. Process according to claim 14, wherein said content is between 20 and 60%.

16. Process according to claim 15, wherein said content is between 25 and 50%.

**Patentansprüche**

1. Verfahren zur Behandlung eines neuen oder regenerierten Katalysators, der einen Träger auf Basis mindestens eines Oxids eines Metalls oder eines Metalloids und mindestens ein aktives Metall enthält, das in Abwesenheit von Wasserstoff durchgeführt wird und darin besteht, daß der genannte Katalysator mit mindestens einem Sulfurierungsmittel mit der nachstehend angegebenen Formel, gelöst in einem Lösungsmittel, behandelt wird:

$$R - S_{(n)} - R'$$

worin n eine ganze Zahl von 3 bis 20 darstellt und die Reste R und R', die gleich oder verschieden sind, jeweils für einen organischen Rest mit 1 bis 150 Kohlenstoffatomen pro Molekül stehen, wobei diese Reste ausgewählt werden aus der Gruppe, die besteht aus gesättigten oder ungesättigten, linearen oder verzweigten Alkylresten oder solchen vom Naphthen-Typ, Arylresten, Alkylarylresten und Arylalkylresten, wobei R' auch ein Wasserstoffatom darstellen kann,

dadurch gekennzeichnet, daß man dem genannten Sulfurierungsmittel elementaren Schwefel zusetzt.

2. Verfahren nach Anspruch 1 zur Behandlung eines neues oder regenerierten Katalysators, der einen Träger auf Basis mindestens eines Oxids eines Metalls oder eines Metalloids und mindestens ein aktives Metall enthält, um schließlich in Gegenwart von Wasserstoff die vollständige oder partielle Sulfurierung, d.h. in stöchiometrischen Mengen oder nicht-stöchiometrischen Mengen, des oder der in die Zusammensetzung des Katalysators gelangenden Metalls (Metalle) durchzuführen, dadurch gekennzeichnet, daß der neue oder regenerierte Katalysator "ex-situ" mit mindestens einem Gemisch aus elementarem Schwefel und einem Sulfurierungsmittel der nachstehend angegebenen allgemeinen Formel behandelt wird, das zwischen 0 und 50°C in den erforderlichen Mengen in die Poren des Katalysators eingeführt wird:

$$R - S_{(n)} - R'$$

3. Verfahren nach einem der Ansprüche 1 und 2 zur partiellen oder vollständigen Sulfurierung eines aktiven Metalls oder mindestens eines der aktiven Metalle, die in die Zusammensetzung eines Katalysators gelangen, der enthält (a) einen Träger auf Basis mindestens eines Oxids eines Metalls oder eines Metalloids und (b) mindestens ein sogenanntes aktives Metall, dadurch gekennzeichnet, daß man den Katalysator in einer ersten Stufe, die "ex situ" und in Abwesenheit von Wasserstoff durchgeführt wird, mit mindestens einem Gemisch aus elementarem Schwefel und mindestens einem Sulfurierungsmittel, bei dem es sich um ein Polysulfid der nachstehend angegebenen allgemeinen Formel handelt, in der Weise behandelt, daß dieses Agens teilweise oder vollständig in die Poren des Katalysators inkorporiert wird:

$$R - S_{(n)} - R'$$

worin n für eine ganze Zahl von 3 bis 20 steht und R' ein Wasserstoffatom oder einen anderen Rest darstellt, der mit dem Rest R identisch oder davon verschieden ist, wobei diese beiden Reste jeweils einen organischen Rest mit 1 bis 150 Kohlenstoffatomen pro Molekül darstellen und ausgewählt werden aus der Gruppe, die besteht aus Alkylresten, d.h. gesättigen oder ungesättigten linearen oder verzweigten Alkylresten oder solchen vom Naphthen-Typ, Arylresten, Alkylarylresten und Arylaklylresten, wobei das Sulfurierungsmittel gelöst in einem Lösungsmittel verwendet wird, und daß man in einer zweiten Stufe, die "in situ" durchgeführt wird, bei der es sich um die Stufe zur Aktivierung des Katalysators handelt, die in Gegenwart von Wasserstoff durchgeführt wird, den in der ersten Stufe erhaltenen Katalysator mit Wasserstoff behandelt, um die erforderliche Menge an Schwefel an dem oder den Metallen, die in die Zusammensetzung des Katalysators gelangen, zu fixieren.

4. Verfahren nach Anspruch 3, in dem die zweite Stufe, die als Aktivierung des Katalysators bezeichnet wird und in situ durchgeführt wird, mit Wasserstoff durchgeführt wird, dem man etwa 0,1 bis 1 Vol.-% Wasser zusetzt.

5. Verfahren zur Behandlung eines neuen oder regenerierten Katalysators, der enthält (a) einen Träger auf Basis mindestens eines Oxids eines Metalls oder eines Metalloids und (b) mindestens ein aktives Metall, in zwei Stufen, wobei man in einer ersten Stufe die "ex situ" zwischen 0 und etwa 50°C und in Abwesenheit von Wasserstoff durchgeführt wird, den Katalysator mit mindestens einem Sulfurierungsmittel, bei dem es sich um ein Polysulfid der nachstehend angegebenen allgemeinen Formel handelt, in der Weise behandelt, daß dieses Agens teilweise oder vollständig in die Poren des Katalysators inkorporiert wird,

$$R - S_{(n)} - R'$$

worin n für eine ganze Zahl von 3 bis 20 steht und R' ein Wasserstoffatom oder einen anderen Rest darstellt, der mit dem Rest R identisch oder davon verschieden ist, wobei diese beiden Reste jeweils einen organischen Rest mit 1 bis 150 Kohlenstoffatomen pro Molekül darstellen und ausgewählt werden aus der Gruppe, die besteht aus Alkylresten, d.h. gesättigten oder ungesättigten linearen oder verzweigten Alkylresten oder solchen vom Naphthen-Typ, Arylresten, Alkylarylresten und Arylalkylresten, wobei das Sulfurierungsmittel gelöst in einem Lösungsmittel verwendet wird und der Katalysator gegebenenfalls anschließend getrocknet wird, und wobei man in einer zweiten Stufe den in der ersten Stufe erhaltenen Katalysator nach einer Methode behandelt, die dadurch charakterisiert ist, daß man (a) den Katalysator in Abwesenheit von Wasserstoff und in Anwesenheit eines inerten Gases oder eines nicht-inerten Gases mindestens etwa 5 min lang "in situ" oder "ex situ" bei einer Temperatur zwischen 65 und 275°C unter einem Druck zwischen etwa 0,5 und 70 bar behandelt, wobei der Katalysator in diesem Stadium gegebenenfalls getrocknet wird (erster Abschnitt der zweiten Stufe), und (b) diesen Katalysator anschließend mindestens 1 min lang bei einer Temperatur von mindestens 275°C in Gegenwart oder Abwesenheit der zu behandelnden Beschickung behandelt (zweiter Abschnitt der zweiten Stufe),
dadurch gekennzeichnet, daß man elementaren Schwefel dem Sulfurierungsmittel zusetzt.

6. Verfahren nach Anspruch 5, bei dem man im Verlaufe des ersten Abschnitts der zweiten Stufe in Gegenwart eines inerten Gases bei einer Temperatur zwischen 75 und 275°C arbeitet.

7. Verfahren nach Anspruch 5, bei dem man im Verlaufe des ersten Abschnitts der zweiten Stufe in Gegenwart von Luft während eines Zeitraums zwischen 5 min und 10 h bei einer Temperatur unterhalb 200°C arbeitet.

8. Verfahren nach Anspruch 5, bei dem das genannte Gas mindestens zum Teil auf eine Temperatur von oberhalb 110°C überhitzter Wasserdampf ist.

9. Verfahren nach Anspruch 7, bei das Gas feuchte Luft ist.

10. Verfahren nach einem der Ansprüche 1 bis 9, bei dem das Sulfurierungsmittel das Di-tert-dodecylpolysulfid oder das Di-tert-nonylpolysulfid ist.

11. Verfahren nach einem der Ansprüche 1 bis 10, angewendet entweder auf die Behandlung eines neuen Katalysators vor seiner Verwendung oder auf die Behandlung eines Katalysators vor seiner Verwendung, der soeben einer ex situ-Regenerierung unterworfen worden ist.

12. Verfahren nach einem der Ansprüche 1 bis 11, bei dem in der Formel $R-S_{(n)}-R'$ n für eine ganze Zahl zwischen 4 und 8 steht und R und R' jeweils 5 bis 40 Kohlenstoffatome pro Molekül enthalten.

13. Verfahren nach einem der Ansprüche 1 bis 12, dadurch gekennzeichnet, daß man in der ersten Stufe in Gegenwart von 0,4 bis 8 Gew.-%, bezogen auf das Gewicht des Polysulfids, mindestens eines Additivs, ausgewählt aus der Gruppe, die besteht aus Aldehyden mit 4 bis 14 Kohlenstoffatomen pro Molekül, Ketonen oder Polyketonen mit 3 bis 18 Kohlenstoffatomen pro Molekül, Äthern mit 5 bis 14 Kohlenstoffatomen pro Molekül, Alkoholen oder Polyalkoholen mit 5 bis 14 Kohlenstoffatomen pro Molekül und organischen Säuren oder Polysäuren mit 3 bis 14 Kohlenstoffatomen pro Molekül, arbeitet.

14. Verfahren nach einem der Ansprüche 1 bis 13, in dem der Gewichtsgehalt an Schwefel, der aus dem Polysulfid stammt, 10 bis 75 % darstellt, bezogen auf das Gemisch aus Polysulfid und elementarem Schwefel.

15. Verfahren nach Anspruch 14, in dem der genannte Gehalt zwischen 20 und 60 % liegt.

16. Verfahren nach Anspruch 15, in dem der genannte Gehalt zwischen 25 und 50 % liegt.

FIG.1

TPS = 100 %

FIG.2

FIG.3

S = 100 %